Europäisches Patentamt

European Patent Office

Office européen des brevets

(11) Publication number: **0 318 241**
**A2**

## (12) EUROPEAN PATENT APPLICATION

(21) Application number: **88311031.4**

(22) Date of filing: **22.11.88**

(51) Int. Cl.⁴: **G01F 5/00 , G01F 1/704**

(30) Priority: **23.11.87 US 123849**

(43) Date of publication of application:
**31.05.89 Bulletin 89/22**

(84) Designated Contracting States:
**DE ES GB IT SE**

(71) Applicant: **THE BABCOCK & WILCOX COMPANY**
**1010 Common Street P.O. Box 60035**
**New Orleans Louisiana 70160(US)**

(72) Inventor: **Bailey, Ralph T.**
**11672 Meadow Lane Avenue, N.W.**
**Uniontown Ohio 44685(US)**
Inventor: **Womack, Edgar Allen**
**184 Schocalog Road**
**Akron Ohio 44314(US)**
Inventor: **Modrak, Thomas M.**
**13191 Bayton**
**Alliance Ohio 44601(US)**

(74) Representative: **Cotter, Ivan John et al**
**D. YOUNG & CO. 10 Staple Inn**
**London WC1V 7RD(GB)**

(54) **Measuring the flow of a packed bed of particles.**

(57) The flow of a packed bed of particles moving in a primary stream in a standpipe (10) is measured by feeding a secondary stream of particles through a feedpipe (16) having an open end (18) facing downstream in the primary stream to fill a void that would otherwise be formed downstream of the feedpipe due to the passage of the primary stream of particles. The flow of the primary stream is proportional to the flow of the secondary stream. The flow of the secondary stream can be measured either by measuring the amount of particles being metered (24) into the feedpipe (16) or by connecting a hopper to the feedpipe and measuring the rate at which a level of particles in the hopper falls.

FIG. 2

# MEASURING THE FLOW OF A PACKED BED OF PARTICLES

This invention relates to measuring the flow of a moving packed bed of particles.

One possible approach for measuring low-velocity flow of a packed bed of particles is to weigh the material from the bed flowing from a tap for a particular period of time. Another approach is to insert some sort of mechanical flow meter into the bed itself. However, if the bed is at high temperature, neither of these approaches is practical. Measuring the rate of flow, at low velocity, for example, of a bed of sand or crushed limestone flowing downwardly, in a standpipe, in which the bed temperature is high, e.g. 871°C (1600°F), poses particular problems. The bed is not fluidised and, thus, is essentially incompressible.

US Patent No. US-A-3 739 636 (Versaci et al) discloses a flow meter for determining the flow rate of a fluid through a conduit wherein a signal having a magnitude that is inversely proportional to the time elapsed for a substance carried by the fluid to travel a fixed distance is produced and converted into a flow rate indication.

US-A-4 170 311 (Spaw) discloses a level measuring system which measures a variable level within a sensing area containing a mass of material. A sensing probe is positioned within the area and is coupled to a tank of an oscillating circuit through a switching network. A reference probe positioned in or near the sensing area is also coupled through the switching network to the tank of the oscillating circuit. The frequency of oscillation depends upon a physical parameter of the mass material within the immediate vicinity of the sensing probe. A signal processing mechanism is coupled to the oscillator for processing this frequency change. The sensing probe can be a cable antenna extending vertically into a material container for measuring the level of material therein.

Neither of the above US patents solves the problems posed above with regard to measuring low velocity flow of a packed bed of particles.

According to one aspect of the invention there is provided apparatus for measuring the flow of a packed bed of particles moving in a primary stream, the apparatus comprising:
a feedpipe having an open end facing downstream in the primary stream, the bed tending to form a void downstream of the open end of the feedpipe;
supplying means for supplying a secondary stream of particles to the feedpipe for filling the void; and
means for measuring the flow of the secondary stream of particles, the flow of the secondary stream being proportional to the flow of the packed bed in the primary stream.

According to another aspect of the invention there is provided a method of measuring the flow of a packed bed of particles moving in a primary stream, the method comprising:
positioning a feedpipe with an open end facing downstream in the primary stream, the bed tending to form a void downstream of the open end of the feedpipe;
supplying a secondary stream of particles to the feedpipe for filling the void; and
measuring the flow of the secondary stream of particles, which flow is proportional to the flow of the particles of the primary stream.

The invention is particularly (but not exclusively) suited to measuring the rate of low-velocity flow of a bed of particles, for example particles of sand or crushed limestone moving in a standpipe. According to embodiments of the invention described below, a feedpipe in the form of a tube is located in the standpipe and may or may not have a portion that extends substantially parallel to the flow. An open end of the tube points downstream in the flow. As particles of sand or other bed material flow over the tube, a void is created at the open end. Sand or other bed material is fed through the tube to fill the void as it is created. The standpipe mass flow can be calculated, for example by metering the flow of the solids into the tube. The embodiments of the invention described below take advantage of the fact that packed beds of particles behave more like deformable solids than liquids. In the absence of a net airflow through the bed, or extreme static pressure in the bed, a packed bed will not readily flow around a right angle. Sand or material fed through the tube fills the void as it is created. Ignoring the difference in the cross-sectional area between the inside and outside of the tube, the velocity of the solids in the packed bed on the inside and on the outside of the tube will be the same. By, for example, metering the flow of the solids into the tube, the velocity of solids in the standpipe can be determined. If the approximate bulk density of the bed material is known, the standpipe mass flow can be calculated. The below-described embodiments of the invention thus provide a technique for measuring flow in high temperature, packed beds which are typical of those in a standpipe of a circulating fluid bed boiler, in an accurate and continuous manner. Experimental results have shown that solid velocities measured with the embodiments of the invention agree with those measured by independent methods quite well (± 10%) within the range extending from 1.524 mm/s (0.06 inches/s) to 152.4 mm/s (6 inches/s) and higher.

The embodiments of the invention described below each provide an apparatus for measuring the flow of a packed bed of particles which is simple in design, rugged in construction and economical to manufacture.

The invention will now be further described, by way of illustrative and non-limiting example, with reference to the accompanying drawings, in which like references designate like or corresponding parts throughout, and in which:

Figure 1 is a schematic representation of an apparatus embodying the invention;

Figure 2 is a view similar to Figure 1, showing the apparatus in operation;

Figure 3 is a side elevational view of an apparatus embodying the invention for measuring the flow rate of a packed bed of particles in a standpipe;

Figure 4 is a partial sectional view of Figure 3 on an enlarged scale, showing an alternative embodiment of a feed pipe; and

Figure 5 is a side elevational view of a further embodiment of the invention.

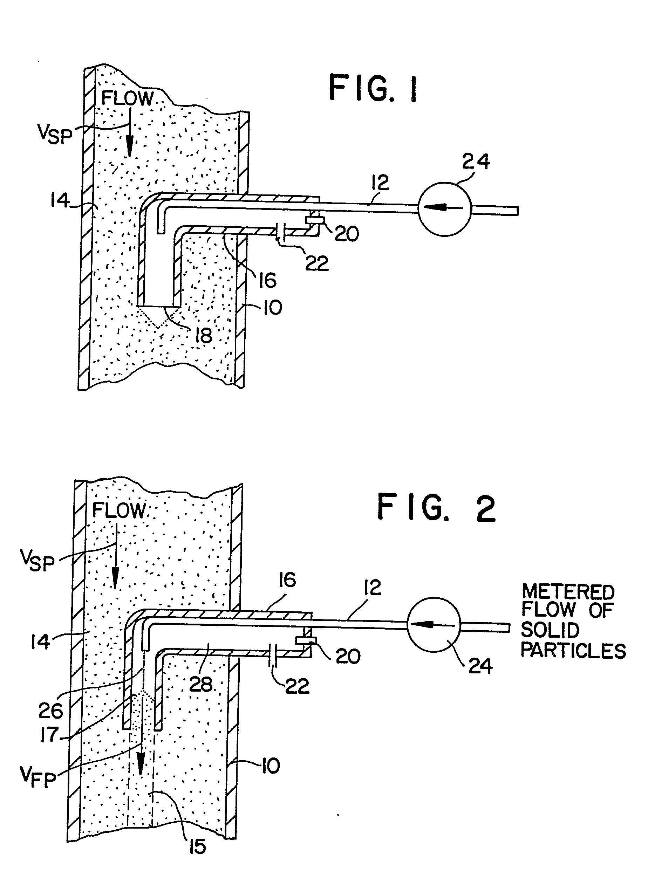

Figures 1 and 2 show an apparatus embodying the invention for measuring the flow of a packed bed of particles 14 in a primary stream flowing in a standpipe 10 at a velocity Vsp which is shown by an arrow. A feedpipe 16 has an open end 18 which faces downstream in the primary stream. Since the packed bed of particles 14 acts more like a deformable solid than a liquid, a void will be formed immediately downstream of the open end 18, as shown by the triangular space in Figure 1 immediately below the open end 18. If a metered flow of solid particles is supplied over a feed tube 12 by metering means 24, a secondary stream of particles 26 is supplied at a rate sufficient to completely fill the void. A stream of particles 15 moving at a velocity Vfp is then discharged into the primary stream of the packed bed 14. If the packed bed 14 and stream of particles 15 are moving only under the influence of gravity or slight pressure, the velocity Vsp will be substantially equal to the velocity Vfp.

This fact can be used advantageously to accurately measure the flow V sp by knowing the flow Vfp. To do this in the embodiment of Figures 1 and 2, a sensor 20, such as an acoustic detector, can be provided in the feedpipe 16 to sense the volume of gas in a space 28. This is the same as measuring the level of particles at 17 in the feedpipe 16. By controlling the metering means 24 to provide just enough of a secondary stream of particles to maintain a constant level 17 (as confirmed by the sensor 20), and thereby providing an isokinetic feeding arrangement, the flow of the secondary stream will be proportional to the flow of the primary stream.

A vent 22 may be provided in the feedpipe 16 to permit changes in the level 17 of particles in the feedpipe.

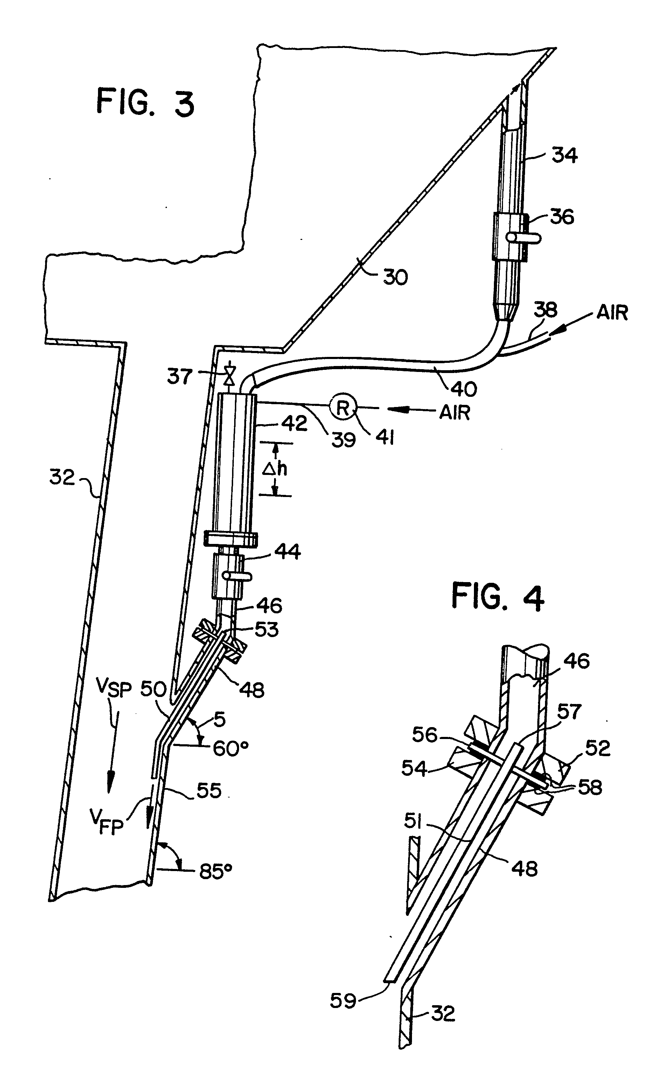

Figure 3 shows an embodiment of the invention where a U-beam hopper 30 carries a quantity of particles such as sand, limestone, pulverised coal or the like. A standpipe 32 extends downwardly from the bottom of the hopper 30 and carries a packed bed of the particles moving in a primary stream at a velocity Vsp. A sample pipe 34 is connected to the hopper 30 for receiving a supply of particles which are provided via a valve 36 and a flexible hose 40 to the top of a clear feed hopper 42. The sample stream of particles is then supplied via a valve 44 to a transfer pipe 46 which has a lower end communicating with an upper open end 53 of a feedpipe 50. The feedpipe 50 has an inclined portion which is inclined at an angle 5 of about 60° to the horizontal and a spout portion which extends into the standpipe 32 and parallel to the primary flow of particles in the standpipe, terminating in an open lower end 55.

Figure 4 shows an alternative embodiment for the feedpipe, shown at 51, which is simply a straight inclined section of pipe having an open upper end 57 and an open lower end 59.

The feedpipes 50 and 51 are both held by a metal disc 56 (Figure 4) that is held between upper and lower flanges 52, 54 and gaskets 58. The upper flange 52 is fixed to the lower end of the transfer pipe 46 and the lower flange 54 is fixed to the upper end of a transfer pipe 48 that is connected through the wall of the standpipe 32.

The standpipe 32 in the embodiment of Figure 3 is shown to be substantially vertical, e.g. at 85° to the horizontal, but this is not a requirement of the measurement technique. It is advantageous to provide the feedpipe 50 or 51 with an inclined section that is inclined by more than 30° with respect to the horizontal to provide adequate flow of the secondary stream of particles through the feedpipe.

It is advantageous to supply the feed hopper 42 with air at a pressure that is equal to or greater than the gas pressure in the standpipe 32. The pressurised air in the feed hopper 42 prevents the invasion of gas and particles from the primary stream into the open lower end 55, 59 of the feedpipe 50, 51 and facilitates the movement of particulates into and through the valve 44, transfer pipe 46 and feedpipe 50, 51. To this end, an air assist line 39 and a pressure regulator 41 are connected to the feed hopper 42 and provide pressurised air. A differential pressure meter can be connected between the feed hopper 42 and the standpipe 32 for this purpose.

In the embodiment of Figure 3, the hose 40 extends somewhat horizontally. An air assist line 38 is used to facilitate the movement of sample particles along the hose 40 while filling the feed hopper 42 with sample particles from the hopper 30.

A vent valve 37 is provided in the feed hopper 42 to vent the feed hopper to atmosphere.

In operation, the valve 44 is first closed to prevent flow from the feed hopper 42 to the primary stream. The valve 37 is then opened to vent air from the feed hopper 42. The valve 36 in the same pipe 34 is then opened and air is supplied to the line 38 to fill the feed hopper 42 with particles from the hopper 30. Once the hopper 42 is filled, the supply of air is stopped and the valves 36 and 37 are closed.

The air pressure in the feed hopper 42 is set to be equal to or greater than the gas pressure in the primary stream, using the air line 39 and regulator 41. The valve 44 is then opened to allow a secondary flow of particles into the upper open end 53 of the feedpipe 50 and out through the lower open end 55. The secondary stream moves at a velocity Vfp, which is substantially equal to the mainstream velocity Vsp. After an initial sudden drop of the particle level in the feed hopper 42, which is due to filling of the transfer pipe 46 and feedpipe 50, the level of particles in the feed hopper 42 will drop at a rate which is directly proportional to the velocity Vfp. By measuring the time it takes the level to drop a known distance Δh, the velocity Vfp can be calculated as follows:

$$V = \frac{\Delta h}{\Delta t} \times \frac{(Feed\ Hopper\ Area)}{(Feedpipe\ area)}$$

where Δt is the measured time for the height of the particle level to change by the distance Δh. The feed hopper area is the cross-sectional area of the feed hopper 42 and the feedpipe area is the effective cross-sectional area of the feedpipe 50.

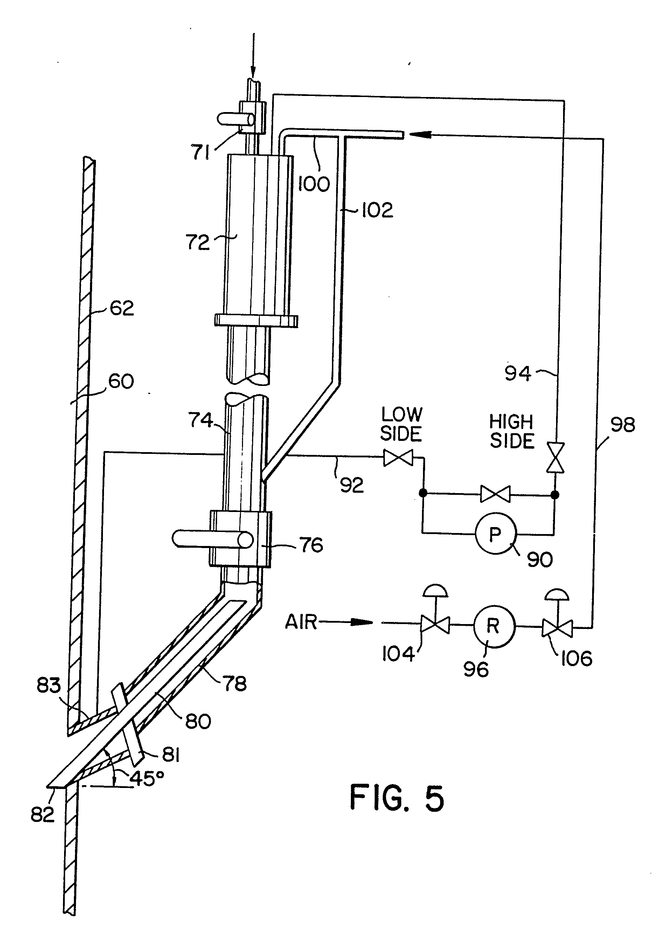

Figure 5 shows an embodiment of the invention which is particularly suited for hot [e.g. 871° C (1600° F)] low velocity, packed beds 60 which are confined in a primary stream within a pipe or conduit 62. A feedpipe 80 having a lower open end 82 which faces downstream is truncated in a manner similar to that shown in Figure 4. This minimises the amount of feedpipe extending into the primary stream. This is advantageous to reduce erosion where the stream of particles may be abrasive.

In the embodiment of Figure 5, the feedpipe 80 is inclined at 45° to the horizontal.

A feed hopper 72, provided with sample particles via a valve 71, is connected to a transfer pipe 74 which supplies particles via a valve 76 to a second transfer pipe 78 which contains the upper end of the feedpipe 80. The feedpipe 80 is held within a plate 81 so that a secondary stream of particles is supplied over the feedpipe 80 into the primary stream.

A differential pressure meter 90 is provided for measuring the pressure difference between its low side, which is connected via an airline 92 to a fitting 83 which communicates directly with the interior of the conduit 62, and its high side, which is connected to a line 94 which communicates with the interior of the feed hopper 72. A regulator 96 is connected to a supply of pressurised air supplied at a variable pressure over a pressure line 98 (having valves 104 and 106) to pipes 100 and 102. The pipe 100 is connected to the top of the hopper 72 and the pipe 102 is connected just above the valve 76. The regulator 96 is adjusted to produce a desired pressure differential, as measured by the meter 90, to compensate for pressures inside the conduit 62 and also to help convey the particles into and along the transfer pipe 74, the valve 76 and the feedpipe 80.

The velocity of the packed bed 60 in the conduit 62 can be measured in a manner similar to that used in the embodiment of Figure 3.

## Claims

1. Apparatus for measuring the flow of a packed bed of particles moving in a primary stream, the apparatus comprising:
a feedpipe (16; 50; 51; 80) having an open end (18; 55; 59; 82) facing downstream in the primary stream, the bed tending to form a void downstream of the open end of the feedpipe;
supplying means for supplying a secondary stream of particles to the feedpipe (16; 50; 51; 80) for filling the void; and
means for measuring the flow of the secondary stream of particles, the flow of the secondary stream being proportional to the flow of the packed bed in the primary stream.

2. Apparatus according to claim 1, wherein the feedpipe (16; 50) has a portion extending parallel to the primary stream.

3. Apparatus according to claim 1, wherein at least a portion of the feedpipe (50; 51; 80) extends at an angle of greater than 30° with respect to the horizontal.

4. Apparatus according to claim 1, wherein the supplying means comprises a feed tube (12) connected to the feedpipe (16) for supplying particles of the secondary stream into the feedpipe, and metering means (24) for metering the flow of particles of the secondary stream into the feedpipe (16).

5. Apparatus according to claim 4, including a sensor (20) connected to the feedpipe (16) for sensing a level of particles in the feedpipe which are above the open end (18) of the feedpipe.

6. Apparatus according to claim 1, wherein the feedpipe (50; 51; 80) has an opposite open end (53; 57) which is above said open end (55; 59; 82) facing downstream in the primary stream, and wherein the supplying means comprising a feed hopper (42; 72) connected to said opposite open end (53; 57) of the feedpipe for containing a supply of particles for the secondary stream, the level of particles in the feed hopper falling at a rate which is proportional to the velocity of the secondary stream of particles through the feedpipe.

7. Apparatus according to claim 6, including an air pressure line (39; 98) connected to the feed hopper (42; 72) and a pressure regulator (41; 96) in the air pressure line for regulating pressure in the air pressure line supplied to the feed hopper for regulating the pressure in the feed hopper to a pressure that is equal to or greater than the gas pressure in the primary stream.

8. Apparatus according to claim 6 or claim 7, wherein the feedpipe (50; 51; 80) includes a section extending at an angle of greater than 30° with respect to the horizontal.

9. A method of measuring the flow of a packed bed of particles moving in a primary stream, the method comprising:
positioning a feedpipe (16; 50; 51; 80) with an open end (18; 55; 59; 82) facing downstream in the primary stream, the bed tending to form a void downstream of the open end of the feedpipe;
supplying a secondary stream of particles to the feedpipe (16; 50; 51; 80) for filling the void; and
measuring the flow of the secondary stream of particles, which flow is proportional to the flow of the particles of the primary stream.

10. A method according to claim 9, including supplying particles into the feedpipe (16) to fill the void and fill the feedpipe with particles to a level above the open end (18) of the feedpipe, controlling the supply of particles into the feedpipe (16) at a rate to maintain the level of particles in the feedpipe at a constant level (17), and measuring the rate of flow of particles into the feedpipe, which corresponds to the flow of the secondary stream.

11. A method according to claim 9, including filling a hopper (42; 72), connected to the feedpipe (50; 51; 80), to a selected level with particles, measuring the rate at which the level of particles in the hopper falls, and calculating the flow of the secondary stream as a function of the rate at which the level of particles in the hopper falls.

12. A method according to claim 11, including supplying a regulated stream of pressurised air to the hopper (42; 72) to facilitate movement of particles from the hopper to the feedpipe (50; 51; 80) and to equalise pressure between the hopper and the primary stream.

# FIG. 1

FLOW

$V_{SP}$

14

24

12

20

22

16

18

10

# FIG. 2

FLOW

$V_{SP}$

16

12

14

20

METERED
FLOW OF
SOLID
PARTICLES

24

22

28

26

17

$V_{FP}$

10

15

# FIG. 3

34

36

30

38 AIR

37

40

42

39 41 AIR

R

Δh

32

44

46

53

48

V_SP 50

5

60°

55

V_FP

85°

# FIG. 4

46

57

56

54

52

58

51

48

59

32

EP 0 318 241 A2

FIG. 5